# EUROPEAN PATENT SPECIFICATION

(11) **EP 3 972 227 B1**
(45) Date of publication and mention of the grant of the patent: **24.07.2024**
(21) Application number: 21197176.7
(22) Date of filing: 16.09.2021
(51) Int. Cl.: H04L 67/1021, H04W 4/44

(54) **METHOD FOR DRIVING CONTROL, DEVICE AND SYSTEM**
VERFAHREN ZUR ANTRIEBSREGELUNG, VORRICHTUNG UND SYSTEM
PROCÉDÉ DE COMMANDE D'ENTRAÎNEMENT, DISPOSITIF ET SYSTÈME

(30) Priority: 21.09.2020 CN 202010997960
(43) Date of publication of application: 23.03.2022
(73) Proprietor: Apollo Intelligent Connectivity (Beijing) Technology Co., Ltd., Beijing 100176 (CN)
(72) Inventor: ZHANG, Zhuhua, Beijing, 100085 (CN); ZHANG, Hao, Beijing, 100085 (CN)
(74) Representative: Gill Jennings & Every LLP

(56) References cited:
- WO-A1-2020/019984
- JP-A- 2015 032 260
- JP-A- 2018 207 154
- US-A1- 2019 033 882
- US-A1- 2021 185 484

## Description

### TECHNICAL FIELD

Embodiments of the present disclosure relate to the fields of intelligent traffic, autonomous driving, and vehicle infrastructure cooperation.

### BACKGROUND

In recent years, as a new technology, the intelligent transportation system (ITS) takes involved factors such as a road, traffic, person and environment into a comprehensive consideration using advanced science and technology, thus implementing an intelligent traffic management and bringing about a possibility and hope to solve a road traffic problem. With the development of communication network, especially with the deployment of the fifth generation (5G) communication network, ITS is desired to support a human-vehicle-infrastructure-cloud cooperative communication and interaction, to provide different services for different types of vehicles, including a high-level autonomous driving vehicle, a networked vehicle having a communication capability, and an existing mass transit vehicle. Accordingly, the safety of the driving and the traffic efficiency are improved, and the intelligent traffic is realized. At present, there is a lack of a solution for the regulation on a cooperative interaction between a vehicle side, an infrastructure side and a cloud side.

WO 2020/019984 A1 provides a communication solution for internet of vehicles, where the node V2X-C. 1, with which the vehicle is registered, asks node V2X-C.2 to assign a V2X regional service node (V2X-R.21) to the vehicle and sends the access address of the V2X-R.21 to the vehicle, so that the vehicle is connected to a V2X server in the area where the vehicle is currently located; and after the vehicle is connected to the V2X-R.21, the information such as traffic light status, traffic lights, warnings generated according to the information reported by surrounding vehicles, are pushed to the vehicle by the V2X-R.21. JP 2018207154A provides a communication control apparatus and method, where the control unit of the edge server collects various types of sensor information measured by the vehicle, the roadside sensor, and the like at every predetermined update cycle, and then update the dynamic information of the map M1 based on the collected sensor information; then, upon receiving a dynamic information request message from a predetermined user's communication terminal, the control unit transmits the latest dynamic information of map M1 to the communication terminal.

### SUMMARY

The invention defines a method and an electronic device according to the independent claims 1 and 7. Further detailed embodiments, including the system of claim 8, are defined in the dependent claims.

### BRIEF DESCRIPTION OF THE DRAWINGS

The above and other objectives, features and advantages of the present disclosure will become more apparent in combination with the accompanying drawings and with reference to the following detailed description. In the accompanying drawings, the same or similar reference numerals denote the same or similar elements. In the accompanying drawings,
Fig. 1 is a schematic diagram of an example environment in which a plurality of embodiments of the present disclosure can be implemented;
Fig. 2 is a block diagram of a driving control system according to some embodiments of the present disclosure;
Fig. 3 is a block diagram of a networking example related to a regional platform subsystem according to some embodiments of the present disclosure;
Fig. 4 is a signaling diagram between a conveyance, a device platform subsystem and a regional platform subsystem according to some embodiments of the present disclosure;
Fig. 5 is a schematic diagram of a location relationship between a heading angle of a conveyance and a road-side computing module in the same coordinate system according to some embodiments of the present disclosure;
Fig. 6 is a signaling diagram between a conveyance, a device platform subsystem and a central platform subsystem according to some embodiments of the present disclosure;
Figs. 7A and 7B are signaling diagrams between a conveyance, a device platform subsystem and/or a regional platform subsystem according to some embodiments of the present disclosure;
Fig. 8 is a flowchart of a method for driving control, performed at a conveyance side, according to some embodiments of the present disclosure;
Fig. 9 is a flowchart of a method for assisting in driving control, performed at a regional platform subsystem side, according to some embodiments of the present disclosure;

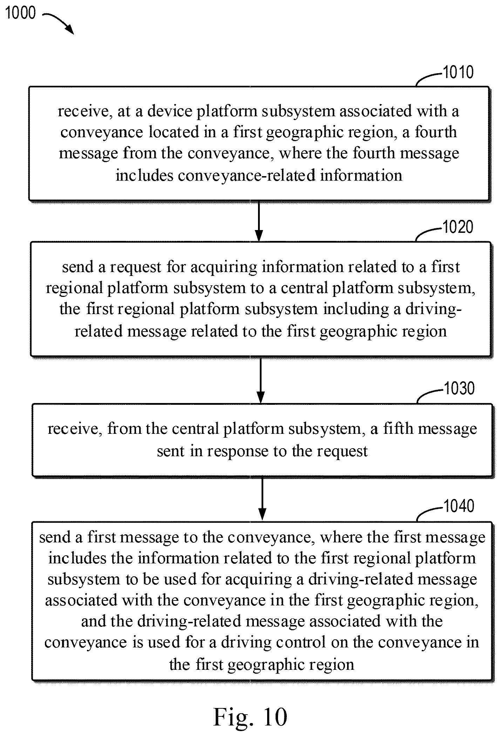

Fig. 10 is a flowchart of a method for assisting in driving control, performed at a device platform subsystem side, according to some embodiments of the present disclosure;

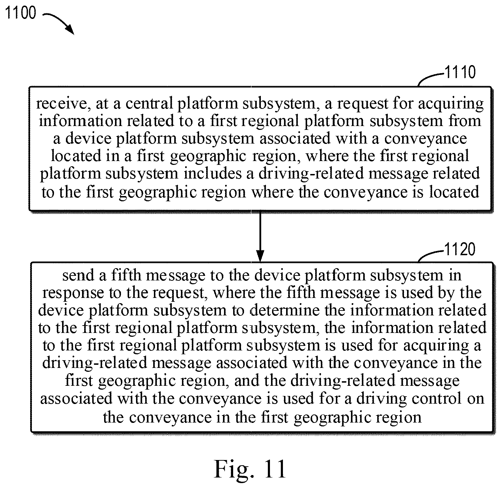

Fig. 11 is a flowchart of a method for assisting in driving control, performed at a central platform subsystem side, according to some embodiments of the present disclosure;
Fig. 12 is a schematic block diagram of an apparatus for driving control, at a conveyance side, according to some embodiments of the present disclosure;
Fig. 13 is a schematic block diagram of an apparatus for assisting in driving control, at a regional platform subsystem side, according to some embodiments of the present disclosure;
Fig. 14 is a schematic block diagram of an apparatus for assisting in driving control, at a device platform subsystem side, according to some embodiments of the present disclosure;
Fig. 15 is a schematic block diagram of an apparatus for assisting in driving control, at a central platform subsystem side, according to some embodiments of the present disclosure; and
Fig. 16 is a block diagram of a device which can implement a plurality of embodiments of the present disclosure.

### DETAILED DESCRIPTION OF EMBODIMENTS

Embodiments of the present disclosure will be described in more detail below with reference to the accompanying drawings. Some embodiments of the present disclosure are shown in the accompanying drawings. However, it should be understood that the present disclosure may be embodied in various forms and should not be construed as being limited to the embodiments set forth herein. In contrast, these embodiments are provided in order to make a more thorough and complete understanding for the present disclosure. It should be understood that the accompanying drawings and embodiments of the present disclosure are only for an illustrative purpose, and not used to limit the scope of the present disclosure.

In the description for embodiments of the present disclosure, the term "include" and similar terms thereof should be understood as open-ended, i.e., "include, but not limited to." The term "based on" should be understood as "at least partially based on." The term "an embodiment" or "this embodiment" should be understood as "at least one embodiment." The terms "first," "second" and the like may refer to different or identical objects. Other explicit and implicit definitions may also be included below.

As mentioned above, in an intelligent transportation system (ITS), a driving control for a conveyance such as a vehicle is related to an environment perception capability and a communication capability of the conveyance itself. At present, the networking of conveyances is developing.

From the viewpoint of networking, from a conventional network assistance information interaction (e.g., acquisition of navigation information) to a networking cooperative decision and control (vehicles cooperate, or a vehicle and an infrastructure cooperate, to plan and control a vehicle), the networking dimension of the conveyance mainly focus on the degree of communication between participating parties such as between vehicles, between a vehicle and an infrastructure, between a vehicle and a cloud, between a vehicle and a person. The higher the networking level is, the more complete the information that can be shared between conveyances is. However, since many of the conveyances (e.g., vehicles) in stock in the current market do not have the networking function or only have an incipient networking function, there is a need to provide an approach through which a conveyance with a low networking level can also participate in the networking of a high level, to implement an intelligent control for the overall traffic system.

In an existing vehicle-to-everything or Internet of vehicles (V2X) technology, various driving related messages (e.g., a perception message, a control message and a decision planning message) are generally provided by deploying road-side devices on a road and exchanging a V2X message between a road-side unit (RSU) of the road-side device and an on-board unit (OBU) of the conveyance, so that to implement the driving control function of the conveyance. In other words, the V2X technology implements various driving control services through a communication between the RSU and the OBU, and therefore, the vehicle needs to be provided with the OBU to receive the V2X message from the RSU. However, currently the RSU and other infrastructures are being built on a large scale, but the popularity of the OBU is still low, and many conveyances in stock are not provided with an OBU, and thus cannot receive the V2X message from the RSU. In this case, relying only on a vehicle-infrastructure communication may result in that a large amount of road-side information cannot be synchronized to the conveyance in time.

According to an embodiment of the present disclosure, an improved driving control scheme is proposed. According to the scheme, a vehicle-infrastructure cooperation message is pushed to the conveyance after being centralized. The vehicle-infrastructure cooperation message may be a V2X-based standardized message. Specifically, a central platform subsystem issues, based on the conveyance-related information, the information related to a regional platform subsystem associated with the region where the conveyance currently is located, the conveyance sends the conveyance-related information to the associated regional platform subsystem, and the regional platform subsystem sends the driving-related message to the conveyance based on the conveyance-related information, to control the driving of the conveyance in the region. Thus, the intelligent control for the overall traffic system is implemented.

Embodiments of the present disclosure will be described in detail below with reference to the accompanying drawings.

### Example Environment

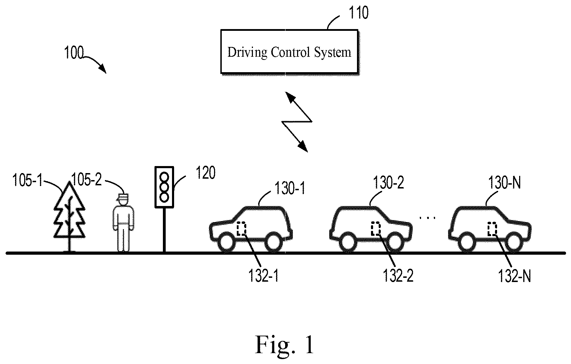

Fig. 1 is a schematic diagram of an example traffic environment 100 in which a plurality of embodiments of the present disclosure can be implemented. The example environment 100 includes one or more conveyances 130-1, 130-2, ... 130-N. For ease of description, the conveyances 130-1, 130-2, ... 130-N may be referred to as the conveyance 130 collectively or individually. As used herein, the conveyance refers to any type of means that can carry a person and/or an object and may move. In Fig. 1 and other figures and descriptions herein, the conveyance 130 is illustrated as a vehicle. The vehicle may be a motor vehicle or a non-motor vehicle, and examples of the vehicle include, but not limited to, a car, a sedan, a truck, a bus, an electric vehicle, a motorcycle, a bicycle, and the like. However, it should be understood that the vehicle is only an example of the conveyance. In addition to the vehicle, the embodiments of the present disclosure are also applicable to other conveyances such as a ship, a train and an airplane.

The one or more conveyance 130 in the environment 100 may be a conveyance having an autonomous driving capability, also referred to as unmanned conveyances. Another or some other conveyances 130 in the environment 100 may be a conveyance not having the autonomous driving capability or only having a driving assistance capability. Such a conveyance may be controlled by a driver. An integrated device or removable device in the one or more conveyances 130 may have a capability to communicate with other devices based on one or more communication technologies, for example, communicate with other conveyances or other devices through a vehicle-to-vehicle (V2V) technology, a vehicle-to-infrastructure (V2I) technology, a vehicle-to-network (V2N) technology, a vehicle-to-everything or Internet of vehicles (V2X) technology, or any other communication technologies.

The conveyances 130 may be provided with a positioning apparatus to determine its own location. For example, the positioning apparatus may implement positioning based on any one of: positioning technology based on laser point cloud data, a global positioning system (GPS) technology, a global navigation satellite system (GLONASS) technology, a BeiDou navigation system technology, a Galileo positioning system (Galileo) technology, a quasi zenith satellite system (QAZZ) technology, a base station positioning technology, a Wi-Fi positioning technology, and the like.

In addition to the conveyances 130, there may be another object present in the environment 100. For example, the other object is a movable or immovable object such as an animal, a plant 105-1, a person 105-2 or a traffic infrastructure. The traffic infrastructure includes an object for guiding traffic and indicating a traffic rule, such as a traffic light 120, a traffic indicator board (not shown), a streetlight or a traffic signal controller. The objects outside a conveyance are collectively referred to as exterior objects 105.

A driving control system 110 for the conveyances 130 is further deployed in the environment 100. The driving control system 110 is configured to control at least the driving of a conveyance 130 in the environment 100. Each of the conveyances 130-1, 130-2 ... 130-N may have a corresponding wireless transceiver modules 132-1, 132-2 ... 132-N, thereby implementing a signaling communication between a conveyance 130 and an external device. For ease of description, the wireless transceiver modules 132-1, 132-2 ... 132-N are referred to as the wireless transceiver module 132 collectively or individually. The driving control system 110 may communicate with a conveyance 130 through the wireless transceiver module 132 on the conveyance 130. The conveyance 130 may support the communication with the driving control system 110 to obtain corresponding information, and a control on driving of the conveyance 130 is performed based on the obtained information. The conveyance 130 may have a display part such as a central control screen, to display related information. The wireless transceiver module 132 may further transmit the information related to the conveyance 130 to the driving control system 110, such as geographic location information of the conveyance 130, a unique identification code of a conveyance, perception data collected by a perception device (if present) on the conveyance 130, or a result obtained by processing the perception data by a computing unit (if present) on the conveyance 130, etc. According to embodiments of the present disclosure, through the driving control system 110 and the wireless transceiver module 132, some or all of driving controls for conveyances of various intelligent levels and networking levels may be supported. The wireless transceiver module 132 may be a module integrated in the conveyance 130, or may be a portable wireless communication device (e.g., a mobile phone, a personal communication system (PCS) device, a personal navigation device, and a personal digital assistant (PDA)) carried by the driver of the conveyance 130, which can provide a network communication with an external device, for example, a communication via a cellular network.

It should be understood that the facilities and objects shown in Fig. 1 are merely examples. The types, numbers, relative arrangements, etc. of the objects occurring in different environments may vary. The scope of the present disclosure is not limited in this respect. For example, in the environment 100, there may be more road-side devices deployed at the road-side and more perception devices, for monitoring additional geographic locations. A plurality of remote end devices may be involved in embodiments of the present disclosure, or a remote end device may be not involved in embodiments of the present disclosure.

### Example Driving Control System

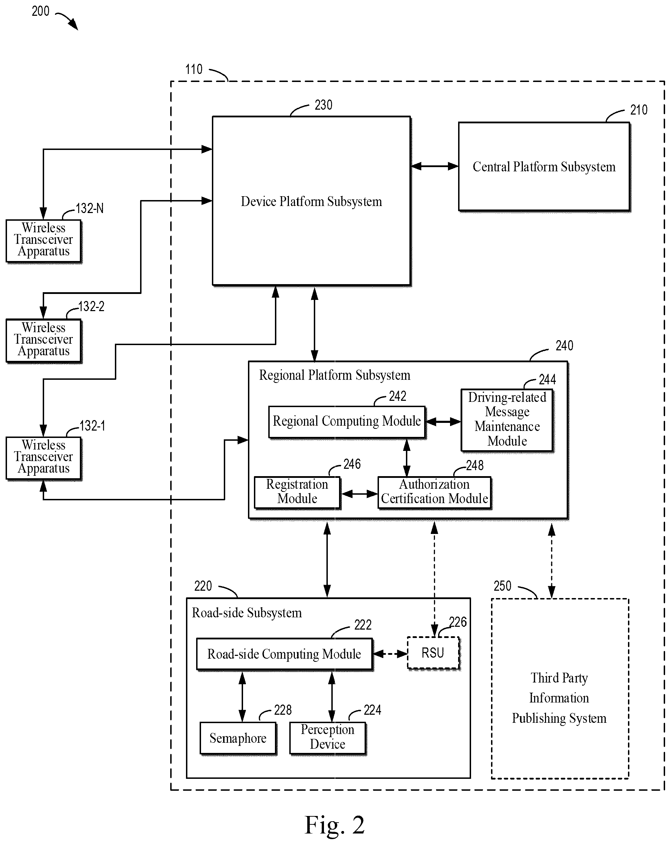

Fig. 2 is a schematic block diagram of the driving control system 110 of Fig. 1 according to some embodiments of the present disclosure. Fig. 2 further illustrates the wireless transceiver module 132 on the conveyance 130, the wireless transceiver module 132 interacting with the driving control system 110. The driving control system 110 includes one or more regional platform subsystems 240 and one or more road-side subsystems 220, and these subsystems are configured to provide perception, decision, and/or a cooperative control during the driving of the conveyance 130. The driving control system 110 may further include a central platform subsystem 210 for a centralized control and management on the subsystems in the driving control system 110. The central platform subsystem 210 may also be referred to as a central platform, a center platform, a centralized platform, or the like. Alternatively or additionally, the driving control system 110 may further include one or more device platform subsystem 230 (e.g., original equipment manufacturer (OEM) clouds). Alternatively or additionally, the driving control system 110 may further include a third party information publishing system 250 (e.g., a traffic management platform). A regional platform subsystem may also sometimes be referred to as a cloud control platform, a vehicle-infrastructure cooperation management platform, a central subsystem, an edge computing platform, a cloud computing platform, and the like.

In practice, the deployment is generally performed according to geographic regions. A city may be divided into one or more geographic regions, and the geographic regions have different geographic ranges. For example, a geographic region may be a city, a road segment, etc. The central platform subsystem 210 may manage the geographic regions of all cities according to geographic ranges. The regional platform subsystem 240 may be associated with a city or with a portion of a geographic region in a city, in other words, a city may have one or more regional platform subsystem 240. Thus, the central platform subsystem 210 is associated with a plurality of regional platform subsystems 240. The central platform subsystem 210 may manage information associated with the one or more regional platform subsystems 240, such as a city name associated with the regional platform subsystem 240, the serial number of a city, a list of geographic regions associated with the regional platform subsystems 240, a service address of a geographic region, and a range of the geographic region. The information associated with a regional platform subsystem 240 may be entered manually, or registered with the central platform subsystem 210 actively by the regional platform subsystems 240. The central platform subsystem 210 may detect a city and a geographic region in the city where the conveyance 130 is located. When the central platform subsystem 210 detects the city and the geographic region in the city where the conveyance 130 is located, the conveyance 130 may be notified of the information related to the regional platform subsystem 240 which is associated with the city and the geographic region in the city where the conveyance 130 is located, for example, via the device platform subsystem 230 associated with the conveyance 130. Accordingly, the conveyance 130 may communicate with the regional platform subsystem 240 associated with a geographic region where the conveyance 130 is located directly or via the device platform subsystem 230 associated with the conveyance 130. For example, in Fig. 2, a connection is established between the wireless transceiver apparatus 132-1 and the regional platform subsystem 240.

The device platform subsystem 230 in the driving control system 110 may be a networking system, for example, the original equipment manufacturer (OEM) clouds, which is provided for the conveyance 130 by the manufacturer of the conveyance 130. Manufacturers of different brands provide different OEM clouds to provide various networking services for the conveyances 130 of their brands. A device platform subsystem 230 may communicate with a corresponding conveyance 130 via the a wireless transceiver apparatus 132, and receive conveyance-related information of the conveyance 130 from the conveyance 130. The device platform subsystem 230 may also be in communication with the central platform subsystem 210. The communication between the device platform subsystems 230 and the central platform subsystem 210 may be a communication through a wired or wireless network. A device platform subsystem 230 may acquire the information related to a regional platform subsystem 240 via the communication with the central platform subsystem 210. The device platform subsystem 230 may determine the information related to the regional platform subsystem 240 associated with the city and the geographic region in the city where the conveyance 130 is located, based on the conveyance-related information of the conveyance 130. Additionally or alternatively, the device platform subsystem 230 may also communicate with the associated regional platform subsystem 240, to provide a registration and an authorization on the conveyance 130 in a corresponding city or a geographic region of the city.

The road-side subsystems 220 are mainly deployed in the vicinity of the geographic region where the conveyance 130 travels and/or parks, for example, may be deployed on both sides of a road at a certain interval, or may have a predetermined distance from locations at which the conveyance 130 may appear. Thus, a geographic region may be associated with a different number of road-side subsystems 220, and a regional platform subsystem 240 may be related to and associated with a plurality of road-side subsystems 220.

The road-side subsystem 220 may include one or more road-side computing module 222, one or more perception device 224, and one or more semaphore 228. The semaphore 228 may generate a signal light signal for presenting a traffic signal on the signal light. Alternatively or additionally, the road-side computing module 222 may further include one or more RSU 226, which may provide a direct communication with the OBU (if there is an OBU) equipped on the conveyance 130. For example, the direct communication may be a direct communication based on an Internet of Things (V2X) protocol. However, if the conveyance 130 is not equipped with an OBU, the conveyance 130 cannot receive a vehicle-infrastructure cooperation message through the RSU 226.

The RSU 226 is a device having a communication capability. The RSU 226 may provide the direct communication with an OBU, for example, a direct communication based on the Internet of Things (V2X) protocol. Alternatively or additionally, the RSU 226 may also provide a network communication with a regional platform subsystem 210, e.g., a communication via a cellular network.

The perception device 224 is configured to monitor the environment 100 where the conveyance 130 is located. For example, the perception device 224 may be configured to perceive a road traffic condition, a road natural condition, a weather condition, etc. of the environment 100 within a perceptual range, and input the perception data to the road-side computing module 222. The perception device 224 may be disposed in the vicinity of the region where the conveyance 130 travels and/or parks. Depending on the perception capability, the perceptual range of the perception device 224 is restricted. In some situations, the perceptual ranges of a plurality of adjacent perception devices 224 may partially overlap. The perception devices 224 may be disposed at the road-side, disposed on the road surface, or deployed at a height, for example, fixed at a height by a support bar, as required. In some examples, in addition to fixing a perception device 224 at a specific location, a movable perception device 224 such as a movable perception site may also be provided.

The perception device 224 may include one or more sensor units, and these sensor units may be of the same type or different types, and may be distributed at the same location or different locations within the perceptual range. Examples of the sensor units in the perception device 224 may include, but not limited to, an image sensor (e.g., a camera), a laser radar, a millimeter wave radar, an infrared sensor, a positioning sensor, an illumination sensor, a pressure sensor, a temperature sensor, a humidity sensor, a wind speed sensor, a wind direction sensor, an air quality sensor, and the like. The image sensor may collect image information; the laser radar and the millimeter wave radar may collect laser point cloud data; the infrared sensor may use infrared rays to detect an environmental condition in the environment; the positioning sensor may collect location information of an object; the illumination sensor may collect a metric value indicating an intensity of illumination in the environment; the pressure sensor, the temperature sensor and the humidity sensor may respectively collect metric values indicating a pressure, a temperature and humidity; the wind speed sensor and the wind direction sensor may respectively collect metric values for indicating a wind speed and a wind direction; and the air quality sensor may collect some indexes related to an air quality such as an oxygen concentration, a carbon dioxide concentration, a dust concentration and a contaminant concentration in air. It should be appreciated that only some examples of the sensor units are listed above. Other types of sensors may also be provided according to actual requirements.

The road-side computing module 222 are configured to provide a computing function, especially a function for computing information associated with the conveyance 130. The road-side computing module 222 may be any device having a computing capability, such as one or more processors, one or more processing devices and one or more general purpose computers. The road-side computing module 222 may be configured to obtain original perception information from the one or more perception devices 224. A data transfer between the road-side computing module 222 and a perception device 224 may be based on a wired or wireless communication connection. The road-side computing module 222 may also be configured to process the perception information from the perception devices 224, and generate a driving-related message for a conveyance 130 based on the perception information.

The driving-related message may include at least one of: a perception message indicating a perception result of the environment around the conveyance 130, a decision planning message indicating a decision planning of the conveyance 130 during driving, or a control message indicating a specific driving operation of the conveyance 130 during the driving. In the order, the information indicated by the three types of messages is respectively dependent on the information contained in the previous type of message. For example, the perception result of the environment is based on the perception information of the perception devices 224, the decision planning is based at least on the perception result of the environment, and the control message is generally made on the basis of the decision planning or on the basis of the perception result of the environment. Depending on the computing capability and configuration of a road-side computing module 222, the road-side computing module 222 may perform one or more levels of computation based on the perception information of the perception devices 224, so as to determine the perception message, the decision planning message and/or the control message for the conveyance 130. The driving-related message determined by the road-side computing module 222 may be further processed by another computing device as required.

In some embodiments, the road-side computing module 222 may determine an environmental perception result related to the conveyance 130 and generate a perception message through an algorithm such as a data fusion algorithm and an obstacle perception algorithm. For example, the road-side computing module 222 may perform a direct obstacle perception and/or a further semantic level perception on the original perception information. The obstacle perception includes recognizing a size, shape, speed, etc. of an obstacle on the road, and the semantic level perception further includes determining a road condition based on the obstacle perception result, for example, a determination on a zombie vehicle on the road, and a determination on a special vehicle on the road.

Depending on the source and specific content of the perception information, the perception message may include indication information related to one or more other aspects of the environment 100 and/or the conveyance 130 in the environment 100. In some embodiments, the perception message may include the following information of one or more aspects: information related to an obstacle present in the environment 100, to indicate at least one of a type, location information, speed information, direction information, description information of a physical appearance, a historical trajectory and/or a predicted trajectory of the obstacle; information related to a physical condition of a road in the environment 100, to indicate at least one of a road-surface physical condition of the road or structural information of the road; information related to traffic facilities in the environment 100, to indicate at least one of a status of a signal light on the road and/or a traffic sign on the road; information related to a road traffic condition in the environment 100, to indicate at least one of a lane sign, a traffic flow and/or a traffic event related to the road and/or a lane in the road; and information related to a meteorological condition in the environment 100. In some embodiments, the perception message may also include assistance information related to positioning of the conveyance 130, diagnostic information for a failure of the conveyance 130, information related to a software system in the conveyance 130, and/or time information. Although some examples of the content contained in the perception message are listed above, it should be understood that the perception message may also include other content, including less or more content.

The decision planning message may include the following information at one or more aspects: an indication for a driving road to which a decision is to be applied, a decision planned start time information and/or end time information, a decision planned start location information and/or the end location information, an identifier of a conveyance at which the decision planning is aimed, decision information related to a driving behavior of the conveyance, decision information related to a driving action of the conveyance, information of planned path trajectory point, expected time to reach the path planning trajectory point, information related to another conveyance to which the decision planning relates, map information, time information, etc. The map information may indicate, for example, at least one of an identifier of a map, an update approach of the map or a region and location information of the map that are to be updated. For example, the identifier of the map may include a version number of the map, an update frequency of the map, etc. For example, the update approach of the map may indicate an update source (from a remote end device or from an other external source), an update link, update time, etc. of the map. Although some examples of the content contained in the decision planning message are listed above, it should be understood that the decision planning message may also include other content, including less or more content.

The control message may include the following relevant information at one or more aspects: kinematic control information related to an motion of the conveyance 130, dynamics control information related to at least one of a power system, a transmission system, a brake system, and a steering system of the conveyance 130, control information related to experience of an occupant in the conveyance 130, control information related to a traffic warning system of the conveyance 130, and/or time information. Although some examples of the content contained in the control message are listed above, it should be understood that the control message may also include other content, including less or more content.

The road-side subsystem 220 may be in communication with the regional platform subsystem 240. The communication between the road-side subsystem 220 and the regional platform subsystem 240 may be a communication through a wired or wireless network. As described above, a plurality of road-side subsystems 220 may be associated with the regional platform subsystem 240. Thus, the road-side subsystems 220 may transfer the driving-related message (e.g., the perception message) to the regional platform subsystem 240 associated therewith via the communication with the regional platform subsystem 240. In addition, A road-side subsystem 220 may also receive a control signaling, information, data, etc. from the regional platform subsystem 240 associated therewith. A road-side subsystem 220 may also forward corresponding information to an OBU (if there is) equipped on the conveyance 130 through the RSU 250, based on the control of the regional platform subsystem 240.

A regional platform subsystem 240 in the driving control system 110 may communicate with one or more road-side subsystems 220, and maintains geographic location information of the plurality of road-side subsystems 220 associated therewith. The regional platform subsystem 240 may receive driving-related messages from the road-side subsystems 220 associated therewith. Additionally or alternatively, the regional platform subsystem 240 may also receive the driving-related message from the third party information publishing system 250. The regional platform subsystem 240 may communicate with a conveyance 130 that travels into a geographic region associated with the regional platform subsystem 240, and receive conveyance-related information (e.g., a unique identification code, geographic location information, speed information, a travel direction, or a business requirement type of the conveyance 130) from the conveyance 130 via the wireless transceiver apparatus 132. When the conveyance 130 travels into the geographic region associated with the regional platform subsystem 240, the regional platform subsystem 240 may send to the conveyance 130 a driving-related message associated with the conveyance 130. The regional platform subsystem 240 may include a regional computing module 242, a driving-related message maintenance module 244, a registration module 246, and an authorization authentication module 248.

The third party information publishing system 250 may communicate with the regional platform subsystem 240 to send driving-related messages targeting at the conveyance 130 to the regional platform subsystem 240. A driving-related message received from the third party information publishing system 250 may include, for example, information related to the perception message. However, the driving-related message may not be determined based on the perception information of the perception device, but generated by the third party information publishing system 250. In some examples, for example, these driving-related messages may include an notification of the temporary closure of a road issued by the traffic control department, which relates to information of a road traffic state. A first driving-related message may also include a temporary adjustment on a road speed limit, an emergency broadcast, etc.

The registration module 246 may provide a registration of the conveyance 130, and may receive an authentication request from the device platform service subsystem 230. Based on the information (e.g., a vendor unique identification code, a brand, a license plate number, a networking approach and an autonomous driving level) related to the conveyance 130, the registration module 246 may register the conveyance 130, for example, store the information related to the conveyance 130. In some embodiments, the registration module 246 may also return a registration result, for example, return content such as whether the registration is successful or error information.

The authorization certification module 248 may perform an authorization certification on the conveyance 130 to generate authorization information corresponding to the conveyance 130, such as an authorization code or an authorization token. The authorization information may be transferred to the conveyance 130. Afterwards, the wireless transceiver apparatus 132 on the conveyance 130 may use the authorization information to send data to and receive data from the regional platform subsystem 240. In some embodiments, the authorization certification module 248 may encrypt the authorization information and send the encrypted authorization information to the conveyance 130 along with an encryption key. In some embodiments, the authorization information may have valid time, and new authorization information needs to be re-requested before the valid time is reached. In some embodiments, the authorization certification module 248 may also return a authorization certification result, for example, return content such as whether the authentication is successful or error information.

As described above, the regional platform subsystem 240 may receive the driving-related message from the road-side subsystems 220 associated therewith and the third party information publishing system 250. For the associated road-side subsystems 220 and the third party information publishing system 250, the driving-related message maintenance module 244 may respectively store driving-related messages corresponding to the road-side subsystems 220 and the third party information publishing system 250.

The regional computing module 242 is configured to provide a computing function, especially a computing function for the driving-related information associated with the conveyance 130. In some embodiments, the regional computing module 242 may be configured to process the driving-related message from the road-side subsystems 220 and determine, based on the conveyance-related information of the conveyance 130, road-side subsystems 220 associated with the geographic region where the conveyance 130 is located from the plurality of road-side subsystems 220 associated with the regional platform subsystem 240. The regional computing module 242 may determine, from driving-related messages coming from different road-side subsystems 220 and maintained in the driving-related message maintenance module 244, a driving-related message (e.g., a perception message, a decision planning message, and/or a control message) associated with the geographic region where the conveyance 130 is located. Then, the regional computing module 242 may transfer the determined driving-related message associated with the geographic region where the conveyance 130 are located to the conveyance 130. Alternatively or additionally, the conveyance 130 may refer to a vehicle, and the driver in the vehicle may control the driving in the geographic region where the conveyance 130 is located based on the driving-related message associated with the conveyance 130. Alternatively or additionally, the conveyance 130 may refer to an autonomous driving vehicle, and the autonomous driving vehicle may automatically control the driving of the conveyance 130 in the geographic region based on the driving-related message associated with the conveyance 130.

The regional computing module 242 may also be referred to as an edge computing node, which may be a server, a mainframe server, a network node such as an edge server, a cloud computing device such as a virtual machine (VM), and any other device providing a computing capability. In a cloud environment, a remote end device may sometimes also be referred to as a cloud device. In some embodiments, as compared with the road-side computing module 222, the regional computing module 242 may provide a stronger computing capability and/or a capability of more conveniently accessing the core network. Accordingly, the regional computing module 242 may support a fusion on perception information of a larger geographic range. The regional computing module 242 may be deployed at the level of a road segment, for example, may be deployed in an edge machine room of a road segment.

The regional platform subsystem 240, the road-side subsystem 220 and the device platform subsystem 230 that interact with the central platform subsystem 210 are described above. Each of the road-side subsystem 220, the regional platform subsystem 240 and the device platform subsystem 230 may be considered as a small local region network. The road-side subsystem 220 and the regional platform subsystem 240 are responsible for an environment perception within a specific geographic range of the environment 100 and a computation based on the perception information, to achieve a local driving control. The regional platform subsystem 240 are also responsible for the registration and authorization certification of the vehicle 130 under the corresponding city.

In the driving control system 110, there may be one or more road-side subsystems 220 and one or more regional subsystems 240 that interact with the central platform subsystem 210. The central platform subsystem 210 may be considered to provide a cloud capability, and to be capable of obtaining multi-dimensional information (e.g., an environmental perception and an emergent event) related to the driving control of the conveyance 130 in a plurality of road segments, a plurality of regions, even an entire city or a larger geographic range. By mastering the global road network information, the central platform subsystem 210 may provide more capabilities expanded based on the global information.

### Example Networking Approach

In the driving control system 110, one or more device platform subsystems 230, one or more road-side subsystems 220 and one or more regional platform subsystems 240 may be distributed. These regional platform subsystems 240 may selectively interact with the central platform subsystem 210 via the device platform subsystem 230.

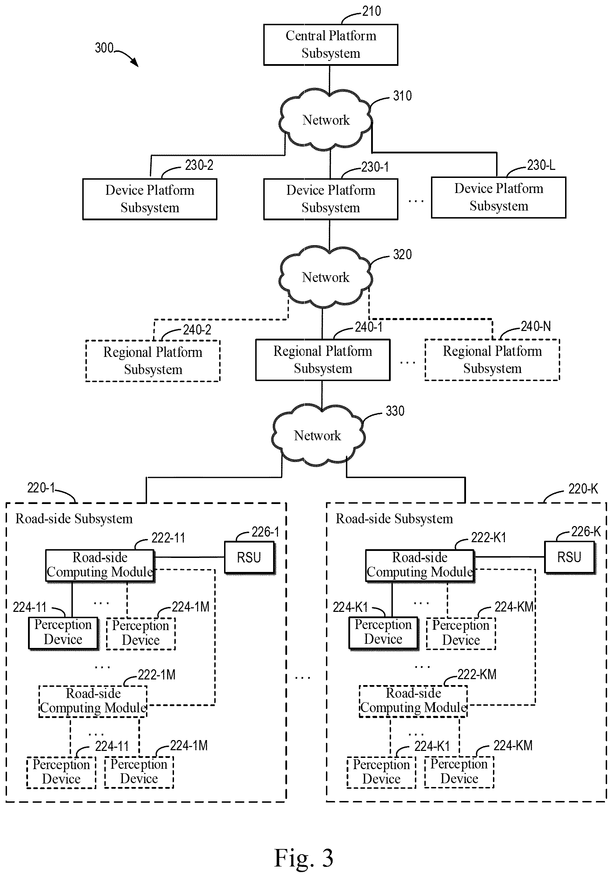

Fig. 3 illustrates a networking example related to the road-side subsystems 220. In the networking example 300 shown in Fig. 3, the central platform subsystem 210 may communicate with the device platform subsystems 230 (respectively represented as 230-1, 230-2 ... 230-L) via a network 310, and the device platform subsystems 230 may selectively communicate with a plurality of regional platform subsystems 240 (respectively represented as 240-1, 240-2 ... 240-N) via a network 320. Hereinafter, a communication between the device platform subsystem 230-1 and the regional platform subsystem 240-1 is taken as an example. For example, based on the conveyance-related information of a conveyance 130, the device platform subsystem 230 may communicate with the regional platform subsystem 240-1 (for ease of discussion, also referred to as a "first regional platform subsystem") associated with the geographic region where the conveyance 130 is located via the device platform subsystem 230-1 associated with the conveyance 130. The plurality of regional platform subsystems 240 may communicate with a plurality of road-side subsystems 220 (respectively represented as 220-1 ... 220-K) via a network 330, and each road-side subsystem 220 includes one or more road-side computing modules 222 and one or more perception devices 224 and a RSU 226. Here, L, N, and K are integers greater than or equal to 1.

In general, the networking approach within the road-side subsystem 220 may depend on the numbers of the road-side computing modules 222, the perception devices 224, and the RSUs 226, and may depend on the computing capabilities of the road-side computing modules 222, the communication ranges supported by the RSU 226, and/or the perceptual range supported by the perception devices 224. There are various networking approaches of the road-side subsystems. In approach 1, in addition to a road-side computing module 222-11, the road-side subsystem 220-1 includes a single perception device 224-11 and a single RSU 226-1, both of which are communicatively coupled to the road-side computing module 222-11. In addition to a road-side computing module 240-K1, a road-side subsystem 220-K includes a single perception device 260-K1 and a single RSU 250-K, both of which are communicatively coupled to the road-side computing module 240-K1. Such a networking approach is characterized in that the road-side subsystems 220 are deployed with the perceptual range of the perception devices 224 as a limit. For example, if the perceptual range of a perception device 224 is 150m, one road-side subsystem 220 is deployed every 150m on the road where the conveyance 130 travels. In approach 2, the road-side computing module 222-11 may be connected to a plurality of perception devices 224-11 ... 224-1M, a road-side computing module 222-K1 may be connected to a plurality of perception devices 224-K1 ... 224-KM, etc. Here, M is an integer greater than or equal to 1. The networking approach is characterized in that the communication capability of the RSU 226 and the computing resources of the road-side computing modules 222 may be fully utilized. Here, assuming that the communication range supported by the RSU 226 is 500m and the perceptual range of the perception device 224 is 150m. Each road-side computing module 222 may support the processing for the perception information of three consecutive perception devices 224, and one road-side subsystem 220 may be provided every 500m on the road where the conveyance 130 travels. Note that the number of perception devices to which each road-side computing module 222 is connected may be different. In approach 3, the road-side subsystem 220-1 includes a single RSU 226-1, a plurality of road-side computing modules 222-11 ... 222-1M and perception devices 224-11 ... 224-1M respectively connecting to these road-side computing modules. The road-side subsystem 220-K includes a single RSU 226-K, a plurality of road-side computing modules 222-K1 ... 222-KM and perception devices 224-K1 ... 224-KM respectively connecting to these road-side computing modules. In this networking approach, the RSU and the road-side computing module 222 are not in one to one relationship. In this way, the communication capability of the RSU 226 may be fully utilized. In approach 4, the approach 4 is similar to the approach 3, and the difference lies in that each road-side computing module 222 may be connected to a plurality of perception devices 224, to process the perception information coming from a plurality of perception devices 226. In this way, the computing resource of the road-side computing module 222 may be further utilized.

### Examples of Interactions between Conveyance and Device Platform Subsystem, and Interactions between Regional Platform Subsystem and Central Platform Subsystem

As mentioned above, in embodiments of the present disclosure, the driving control system 110 includes a central platform subsystem 210, for a centralized control and management on various subsystems in the driving control system 110. The driving control system 110 may further include one or more road-side subsystems 220, a device platform subsystem 230, and one or more regional platform subsystems 240. Interactions between these subsystems may provide a perception, a decision, and/or a cooperative control for the driving of a conveyance 130.

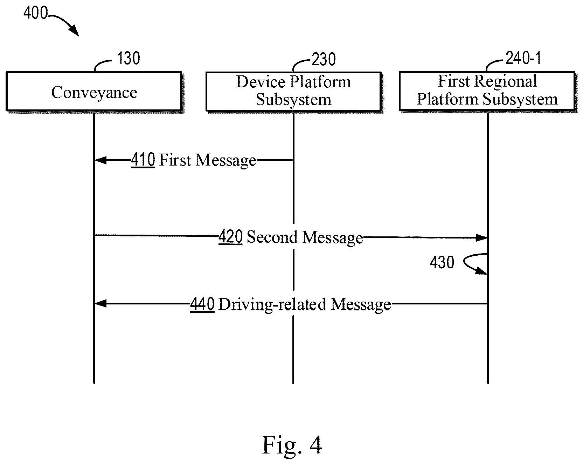

Fig. 4 is a signaling diagram 400 between the conveyance, the device platform subsystem and the regional platform subsystem according to some embodiments of the present disclosure. In the embodiment of Fig. 4, the conveyance 130 may have the wireless transceiver apparatus 132 to communicate with an external device.

At 410, at the conveyance 130 in a geographic region (for ease of discussion, also referred to as a "first geographic region"), the conveyance 130 receives a message (for ease of discussion, also referred to as a "first message") from a device platform subsystem 230 associated with the conveyance 130. The first message includes information related to the first regional platform subsystem 240-1, and a first regional platform subsystem 240-1 includes a driving-related message related to the first geographic region. As described above, the regional platform subsystem 240 may be associated with a city or with a portion of geographic region in the city, and the first regional platform subsystem 240-1 may be associated with the geographic region where the conveyance 130 is located. In some embodiments, the information related to the first regional platform subsystem includes one or more of: a city name, serial number of a city, a list of geographic regions included in a city, a service address of a geographic region, location information of the geographic region.

In some embodiments, before receiving the first message, the conveyance 130 may send a message (for ease of discussion, also referred to as a "fourth message") to the device platform subsystem 230. The fourth message includes conveyance-related information, and the conveyance-related information in the fourth message is used to determine the information related to the first regional platform subsystem. In some embodiments, as a portion of a request for the information related to the first regional platform subsystem, the conveyance-related information in the fourth message is also sent to the central platform subsystem 210 by the device platform subsystem 230 associated with the conveyance 130, for the central platform subsystem 210 to determine the information related to the first regional platform subsystem. For example, the device platform subsystem 230 associated with the conveyance 130 may send conveyance-related information of the conveyance 130 to the central platform subsystem 210, and the central platform subsystem 210 determines information related to the regional platform subsystem which is associated with the conveyance 130 based on the conveyance-related information of the conveyance 130. In some embodiments, the information related to the first regional platform subsystem is determined, from a table of information related to regional platform subsystems, by the device platform subsystem 230 based on the conveyance-related information in the fourth message. The table of information related to regional platform subsystems is sent by the central platform subsystem 210 in response to the device platform subsystem requesting for the information related to the first regional platform subsystem. For example, the device platform subsystem 230 associated with the conveyance 130 may send the request for information related to the first regional platform subsystem to the central platform subsystem 210. In response to the request, the central platform subsystem 210 may send the table of information related to regional platform subsystems to the device platform subsystem 230. Then, the device platform subsystem 230 associated with the conveyance 130 may select the information related to the regional platform subsystem associated with the conveyance 130 from the table of information related to regional platform systems based on the conveyance-related information of the conveyance 130. In this way, the information related to the conveyance 130 may be protected, thereby improving the safety of the information related to the conveyance 130.

As described above, the driving-related message may include at least one of: a perception message indicating the result of perception of the environment around the conveyance 130, the decision planning message indicating the decision planning during the driving of the conveyance 130, and the control message indicating the specific driving operation of the conveyances 130 during the driving. In some embodiments, the driving-related message may include one or more of: signal light data, a road-side perception event, traffic sign information, or road-side perception information. In some embodiments, the driving-related message may be sent to the first regional platform subsystem by the road-side subsystem 240 or the third party information publishing system 250. The road-side subsystem 220 may include one or more perception devices 224, for monitoring the environment of the first geographic region where the conveyance 130 is located to obtain perception information. The road-side subsystem 220 may generate the driving-related message associated with the conveyance 130 in the first geographic region based on the perception information, and then send the driving-related message to the regional platform subsystem 240. Additionally or alternatively, the third party information publishing system 250 (e.g., a traffic control platform) may send driving-related messages targeting at the conveyance 130 to the regional platform subsystem 240, and these driving-related messages may not be determined by the perception information of the perception devices, but is generated by the third party information publishing system 250. In some examples, for example, these driving-related messages may include a notification of the temporary closure of a road issued by the traffic control department (which relates to information of a road traffic state), and may also include a temporary adjustment on a road speed limit, an emergency broadcast, etc.

At 420, the conveyance 130 sends a second message to the first regional platform subsystem 240-1, and the second message includes the conveyance-related information of the conveyance. In some embodiments, the conveyance-related information includes one or more of: a unique identification code, geographic location information, speed information, a travel direction, or a business requirement type of the conveyance 130. In some embodiments, the business requirement type further includes one or more of: a required data type, a range to which reporting of the required data type relates, or a frequency at which the required data type is reported. The required data type includes signal light data, different types of events (e.g., a road construction event, a congestion event, an overspeed event, and a retrograde event), traffic sign information, road-side perception information, etc. The range to which the reporting of the required data type relates describes a distance from the conveyance 130, where the driving-related information within the distance is required to be reported. The frequency at which the required data type is reported refers to a frequency at which the driving-related message is sent. Different data types may have different ranges and frequencies. In some embodiments, when the conveyance-related information includes the business requirement type, the receiving, by the conveyance 130, the driving-related message associated with the conveyance 130 in the first geographic region from the first regional platform subsystem 240-1 further includes: receiving the driving-related message associated with the conveyance 130 in the first geographic region according to the business requirement type. This will be described in detail below at 430.

It should be understood that the conveyance-related information set forth herein and the content included in the business requirement type are only provided as an example, and should not be construed as limiting the scope of the present disclosure. It would be understood by those skilled in the art that there are many different types of conveyance-related information, for example, a vehicle type, a manufacturer, a brand, a networking mode, and an autonomous driving level of a conveyance. In addition, there may also be different description forms for the business requirement type.

After receiving the second message from the conveyance located in the first geographic region at 420, the first regional platform subsystem 240-1 determines, at 430, the driving-related message associated with the conveyance 130 in the first geographic region based on the conveyance-related information. In some embodiments, the first regional platform subsystem 240-1 may receive the driving-related message from the road-side subsystem 220 or the third party information publishing system 250.

At 440, the first regional platform subsystem 240-1 sends the driving-related message associated with the conveyance 130 to the conveyance 130, and the driving-related message associated with the conveyance 130 is used for a driving control on the conveyance 130 in the first geographic region. In some embodiments, the conveyance 130 may refer to a vehicle, and the driver in the vehicle may control the driving of the conveyance 130 in the first geographic region based on the driving-related message associated with the conveyance 130. In some embodiments, the conveyance 130 may refer to an autonomous driving vehicle, and the autonomous driving vehicle may automatically control the driving of the conveyance 130 in the first geographic region based on the driving-related message associated with the conveyances 130.

Accordingly, the driving-related message is centralized by a regional platform subsystem, such that the conveyance 130 may acquire the driving-related message even if the conveyance 130 does not have an OBU in direct communication with the RSU. Thus, the driving control function for a conveyance that cannot receive a vehicle-infrastructure cooperation message may be implemented, thereby achieving effective and safe driving. Therefore, the intelligent control for the overall traffic system is realized.

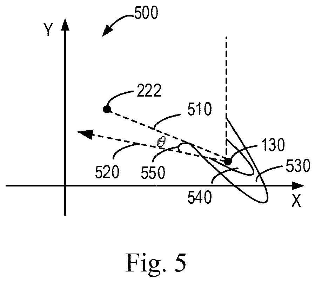

In some embodiments, the first regional platform subsystem 240-1 may provide a differentiated service strategy (which may be determined according to the business requirement type reported by the conveyances 130) according to a specific requirement of the conveyance 130. In some embodiments, the business requirement type further includes one or more of: the required data type, the range to which the reporting of the required data type relates, or the frequency at which the required data type is reported. In addition, when the conveyance-related information includes the business requirement type, the first regional platform subsystem 240-1 may determine the driving-related message associated with the conveyance in the first geographic region according to the required data type and the range to which the reporting of the required data type relates. Then, the first regional platform subsystem 240-1 may send the driving-related message associated with the conveyance to the conveyance 130 according to the frequency at which the required data type is reported. The process in which the first regional platform subsystem determines and sends the driving-related message based on the business requirement type is described in detail below with reference to Fig. 5.

Fig. 5 is a schematic diagram 500 of a relationship between a heading angle of a conveyance and the location of a road-side computing module in the same coordinate system according to some embodiments of the present disclosure.

In Fig. 5, the regional platform subsystem 240-1 maintains geographic location information of a plurality of road-side subsystems 220, which may be described using, for example, GPS longitude and latitude coordinates. At the same time, the regional platform subsystem 240-1 also receives conveyance-related information reported in real-time by a conveyance 130. Based on the above information, a road-side subsystem 220 associated with the first geographic region where the conveyance 130 is located may be determined from the plurality of road-side subsystems 220 associated with the regional platform subsystem 240-1. It is assumed that the real-time location information of the conveyance 130 includes a longitude and a latitude, heading angle information, and is described using a triple <v_lat, v_lon, v_heading>, and the location information of the plurality of road-side subsystems 220 is described using a longitude and latitude list <r_lat, r_lon>. The strategy is as follows:
1. A longitude-latitude coordinate system is first established. In the longitude-latitude coordinate system of the conveyance 130, the center of the earth is used as the origin point, the northward direction of a meridian is used as the y-axis positive direction (the y-axis represents the latitude), and the eastward direction of a parallel is used as the x-axis positive direction (the x-axis represents the longitude).
2. A line 510 is connected between the conveyance 130 and the road-side computing module 222 in the road-side subsystem 220, and an angle 530 from the Y-axis clockwise to the line 510 is calculated.
3. A heading angle of the conveyance 130 from the Y-axis is 540, and the absolute value 550 of a difference value (i.e., the angle *θ*) between 530 and 540 is calculated, and the angle *θ* may indicate whether the conveyance 130 enter or are away from an intersection. In some embodiments, a predetermined threshold value may be set. When the absolute value is within the range of the predetermined threshold value, it may indicate that the conveyance 130 is about to enter the intersection, and a road-side subsystem 220 associated with the intersection is a road-side subsystem that may provide a service, the road-side computing modules 222 included in the road-side subsystem constitute a set R. In a special situation, for example, in a situation where a road has a bend, a determination may be performed in combination with the quadrant where the conveyance is located while the angle *θ* is taken into consideration.
4. A distance between the conveyance 130 and each road-side computing module 222 in the set R is calculated, and a road-side computing module 222 with a distance within the requirement range is selected according to different ranges of different data types in business requirement types sent by the conveyance 130. And thus, a corresponding set of road-side computing modules 222 may be selected according to the different data types. For example, a set of traffic light services is R1, a set of traffic event classes A is R2, and a set of traffic event classes B is R3.
5. The regional platform subsystem 240-1 issues a corresponding set of driving-related data to the conveyance 130 according to frequencies at which the different data types are reported of the conveyance 130.

In this way, the differentiated service strategy may be provided according to the specific requirement of the conveyance 130, to fulfill different requirements of different drivers for different driving-related messages.

In some embodiments, a conveyance 130 need to register with and be authorization certificated by the regional platform subsystem 240, and the conveyance 130 may interact with the regional platform subsystem 240 only after obtaining the authorization certification. In some embodiments, the conveyance 130 may send a request for authentication, the request for authentication is used for requesting the first regional platform subsystem 240-1 to authenticate the conveyance 130 based on the conveyance-related information. In some embodiments, the first regional platform subsystem 240-1 may receive the request for authentication; register the conveyance 130 based on the conveyance-related information; generate authorization information based on the conveyance-related information, the authorization information being used for a communication between the conveyance and the first regional platform subsystem; and send a message (for ease of discussion, also referred to as a "third message"), the third message including the authorization information. For example, using the conveyance-related information (e.g., a vendor unique identification code, a brand, a license plate number, a networking approach, or an autonomous driving level), the first regional platform subsystem 240-1 may register the conveyance 130, for example, store the information related to the conveyance 130. In some embodiments, the first regional platform subsystem 240-1 may also perform authorization certification on the conveyance 130 to generate the authorization information corresponding to the conveyance 130, such as an authorization code or an authorization token. In some embodiments, the first regional platform subsystem 240-1 may receive the request for authentication from the conveyance 130 via the device platform subsystem 230 associated with the conveyance 130, and send the third message to the conveyance 130 via the device platform subsystem 230 associated with the conveyance 130. In some embodiments, the first regional platform subsystem 240-1 may directly receive the request for authentication from the conveyance 130, and directly send the third message to the conveyance 130. In some embodiments, the authorization information may also be encrypted, and the third message includes the encrypted authorization information and an encryption key. In some embodiments, the authorization information may have valid time, and new authorization information needs to be re-requested before the valid time is reached. In this way, the safety of the communication between the conveyance 130 and the regional platform subsystem 240 is further enhanced.

After receiving the third message from the first regional platform subsystem 240-1, the conveyance 130 may interact with the first regional platform subsystem 240-1 using the authorization information. In this way, a service may only be provided for the authorized conveyance 130.

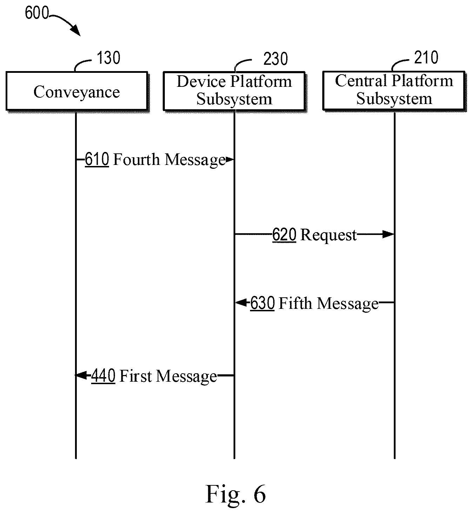

Fig. 6 is a signaling diagram 600 between the conveyance, the device platform subsystem and the central platform subsystem according to some embodiments of the present disclosure. In the embodiment of Fig. 6, the conveyance 130 may have the wireless transceiver apparatus 132 to communicate with an external device.

At 610, the device platform subsystem 230 associated with the conveyance 130 in the first geographic region receive the fourth message from the conveyance 130, the fourth message including the conveyance-related information. At 620, the device platform subsystem 230 send a request for acquiring information related to the first regional platform subsystem to the central platform subsystem 210, the first regional platform subsystem 240-1 including the driving-related message related to the first geographic region.

After receiving, at 620, the request for acquiring information related to the first regional platform subsystem, the central platform subsystem 210 may send a message (for ease of discussion, also referred to as a "fifth message") to the device platform subsystem 230 in response to the request. The fifth message is used by the device platform subsystem 230 to determine the information related to the first regional platform subsystem, the information related to the first regional platform subsystem is used to acquire the driving-related message associated with the conveyance 130 in the first geographic region, and the driving-related message associated with the conveyance 130 is used for a driving control on the conveyance 130 in the first geographic region.

At 630, the device platform subsystem 230 receives the fifth message sent by the central platform subsystem 210 in response to the request. In some embodiments, the request for acquiring information related to the first regional platform subsystem may include the conveyance-related information, and the conveyance-related information may be used by the central platform subsystem 210 to determine the information related to the first regional platform subsystem. The determined information related to first regional platform subsystem is sent to the device platform subsystem 230 via the fifth message. In some embodiments, the fifth message may include a table of information related to regional platform subsystems, and the device platform subsystem 230 may determine the information related to the first regional platform subsystem from the table of information related to regional platform subsystems based on the conveyance-related information. The table of information related to regional platform subsystems records a city name associated with a regional platform subsystem, the serial number of the city, a list of geographic regions included in a city, a service address of a geographic region, location information of the geographic region, etc.

In some embodiments, the central platform subsystem 230 may determine the information related to the first regional platform subsystem from the table of information related to regional platform subsystems based on the conveyance-related information, and the information related to the first regional platform subsystem is sent to the device platform subsystem 230 via the fifth message. In some embodiments, the fifth message includes the table of information related to regional platform subsystems, and the table of information related to regional platform subsystems is used by the device platform subsystem 230 to determine the information related to the first regional platform subsystem therefrom based on the conveyance-related information.

At 440, the device platform subsystem 230 may send the first message to the conveyance 130. The first message includes a message related to the first regional platform subsystem, to be used for acquiring the driving-related message associated with the conveyance 130 in the first geographic region, and the driving-related message associated with the conveyance 130 is used for the driving control on the conveyances 130 in the first geographic region.

In this way, the conveyance 130 may obtain information related to the regional platform subsystem which is associated with a geographic location of the conveyance 130, and thus may communicate with a regional platform subsystem associated with the conveyance 130 to obtain a demanded driving-related message.

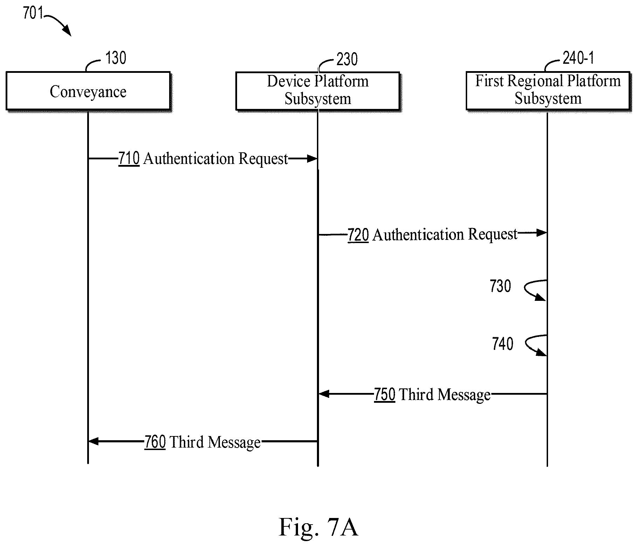

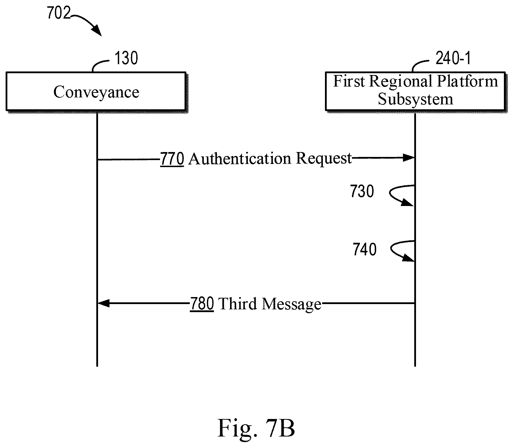

Figs. 7A and 7B are signaling diagrams 700 between the conveyances, the device platform subsystems and/or the regional platform subsystems according to some embodiments of the present disclosure. In the embodiment of Figs. 7A and 7B, the conveyance 130 may have the wireless transceiver apparatus 132 to communicate with an external device.

In the signaling diagram 701 shown in Fig. 7A, at 710, the device platform subsystem 230 receive a request for authentication from the conveyance 130. At 720, the device platform subsystem 230 send the request for authentication to the first regional platform subsystem 240-1, where the request for authentication is used for requesting the first regional platform subsystem to authenticate the conveyance 130 based on the conveyance-related information. After receiving the request for authentication at 720, the first regional platform subsystem 240-1 may register, at 730, the conveyance 130 based on the conveyance-related information. At 740, the first regional platform subsystem 240-1 generates authorization information based on the conveyance-related information, where the authorization information is used for a communication between the conveyance 130 and the first regional platform subsystem 240-1. At 750, the first regional platform subsystem 240-1 sends a third message including the authorization information. At 760, after the first regional platform subsystem 240-1 sends the third message at 750, the device platform subsystem 230 sends the third message to the conveyance 130.

In the signaling diagram 702 shown in Fig. 7B, the conveyance 130 may directly request the registration and the authorization certification with the first regional platform subsystem 240-1 without via the device platform subsystem 230. At 770, the conveyance 130 directly sends the request for authentication to the first regional platform subsystem 240-1. The first regional platform subsystem 240-1 performs the registration and the authorization certification that are described in 730 and 740. At 780, the first regional platform subsystem 240-1 directly sends the third message to the conveyance 130.

### Example Process

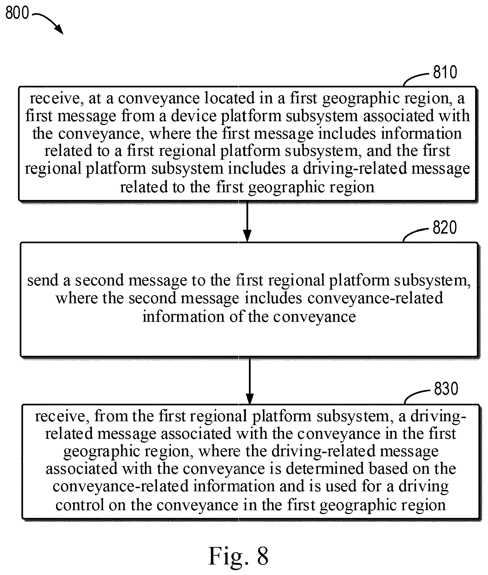

Fig. 8 is a flowchart of a method 800 for driving control according to an embodiment of the present disclosure. The method 800 may be implemented at a wireless transceiver apparatus 132 illustrated in Figs. 1 and 2, which may be the wireless transceiver apparatus 132 mounted on a conveyance 130. It should be understood that, although the steps in the method 800 are shown in a specific order, some of the steps may be performed in an order different from the shown order or in parallel. Embodiment of the present disclosure is not limited in this respect.

At block 810, at the conveyance 130 located in the first geographic region, a first message is received from a device platform subsystem 230 associated with the conveyance 130. The first message includes information related to a first regional platform subsystem, and the first regional platform subsystem 240-1 includes a driving-related message related to the first geographic region. At block 820, the conveyance 130 sends a second message to the first regional platform subsystem 240-1, the second message including conveyance-related information of the conveyance. At block 830, the conveyance 130 receives, from the first regional platform subsystem 240-1, a driving-related message associated with the conveyance 130 in the first geographic region. The driving-related message associated with the conveyance 130 is determined based on the conveyance-related information and is used for a driving control on the conveyance 130 in the first geographic region.

In some embodiments, a request for authentication is sent at the conveyance, and the request for authentication is used for requesting the first regional platform subsystem to perform a registration and an authorization certification on the conveyance based on the conveyance-related information. In some embodiments, the wireless transceiver apparatus on the conveyance receives a third message, the third message includes authorization information, and the authorization information is used for a communication between the conveyance and the first regional platform subsystem.

In some embodiments, the sending the request for authentication includes: sending the request for authentication to the first regional platform subsystem via the device platform subsystem; or sending the request for authentication to the first regional platform subsystem directly.

In some embodiments, the receiving the third message includes: receiving the third message from the first regional platform subsystem via the device platform subsystem; or receiving the third message from the first regional platform subsystem directly.

In some embodiments, the process further includes: sending, before receiving the first message, a fourth message to the device platform subsystem. The fourth message includes the conveyance-related information, and the conveyance-related information in the fourth message is used for determining information related to the first regional platform subsystem.

In some embodiments, the conveyance-related information in the fourth message, as a portion of the request for information related to the first regional platform subsystem, is further sent to a central platform subsystem by the device platform subsystem, for the central platform subsystem to determine the information related to the first regional platform subsystem.

In some embodiments, the information related to the first regional platform subsystem is determined by the device platform subsystem from a table of information related to regional platform subsystems based on the conveyance-related information in the fourth message, where the table of information related to regional platform subsystems is sent by the central platform subsystem in response to the device platform subsystem requesting for the information related to the first regional platform subsystem.

In some embodiments, the driving-related message is sent to the first regional platform subsystem by a road-side subsystem or a third party information publishing system.

In some embodiments, the driving-related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported. In some embodiments, when the conveyance-related information includes the business requirement type, the receiving the driving-related message associated with the conveyance in the first geographic region from the first regional platform subsystem further includes: receiving the driving-related message associated with the conveyance in the first geographic region according to the business requirement type.

In some embodiments, the information related to the first regional platform subsystem includes one or more of: a city name, a serial number of the city, a list of geographic regions included in a city, a service address of a geographic region, or location information of the geographic region.

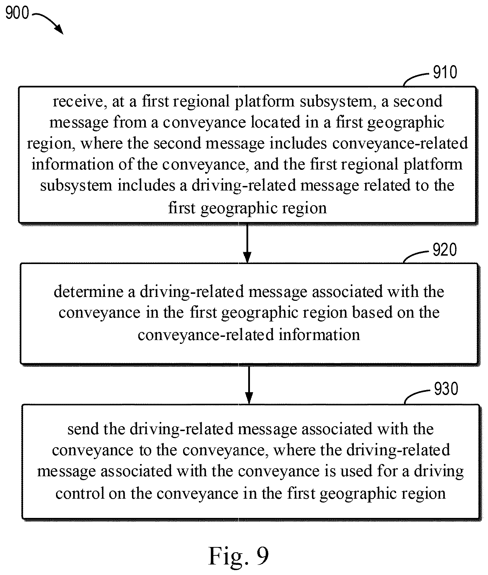

Fig. 9 is a flowchart of a method 900 for assisting in driving control according to an embodiment of the present disclosure. The method 900 may be implemented at a regional platform subsystem 200 illustrated in Fig. 2. It should be understood that, although the steps in the method 900 are shown in a specific order, some of the steps may be performed in an order different from the shown order or in parallel. The embodiment of the present disclosure is not limited in this respect.

At block 910, at the first regional platform subsystem 240-1, a second message is received from the conveyance 130 in a first geographic region, the second message includes conveyance-related information of the conveyance, and the first regional platform subsystem includes a driving-related message related to the first geographic region. At block 920, a driving-related message associated with the conveyance 130 in the first geographic region is determined based on the conveyance-related information. At block 930, the driving-related message associated with the conveyance 130 is sent to the conveyance 130, where the driving-related message associated with the conveyance is used for a driving control on the conveyance 130 in the first geographic region.

In some embodiments, the process 900 further includes: receiving, at the first regional platform subsystem, a request for authentication; and registering the conveyance based on the conveyance-related information; generating authorization information based on the conveyance-related information, the authorization information being used for a communication between the conveyance and the first regional platform subsystem; and sending a third message, where the third message includes the authorization information.

In some embodiments, the receiving the request for authentication includes: receiving the request for authentication from the conveyance via a device platform subsystem associated with the conveyance; or receiving the authentication request from the conveyance directly.

In some embodiments, the sending a third message includes: sending the third message to the conveyance via the device platform subsystem associated with the conveyance; or sending the third message to the conveyance directly.

In some embodiments, the process 900 further includes: receiving, at the first regional platform subsystem, the driving-related message from a road-side subsystem or a third party information publishing system.

In some embodiments, the driving-related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported. In some embodiments, when the conveyance-related information includes the business requirement type, the determining the driving-related message associated with the conveyance in the first geographic region further includes: determining, at the first regional platform subsystem, the driving-related message associated with the conveyance in the first geographic region according to the business requirement type and the range to which the reporting of the required data type relates. The sending the driving-related message associated with the conveyance to the conveyance further includes: sending the driving-related message associated with the conveyance to the conveyance according to the frequency at which the required data type is reported.

In some embodiments, the information related to the first regional platform subsystem includes one or more of: a city name, a serial number of the city, a list of geographic regions included in a city, a service address of a geographic region, or location information of the geographic region.

Fig. 1000 is a flowchart of a method 1000 for assisting in driving control according to an embodiment of the present disclosure. The method 1000 may be implemented at a device platform subsystem 230 illustrated in Fig. 2. It should be understood that, although the steps in the method 1000 are shown in a specific order, some of the steps may be performed in an order different from the shown order or in parallel. The embodiment of the present disclosure is not limited in this respect.

At block 1010, at the device platform subsystem associated with a conveyance located in a first geographic region, a fourth message is received from the conveyance 130, the fourth message including conveyance-related information. At block 1020, a request for acquiring information related to the first regional platform subsystem is sent to a central platform subsystem 210, and a first regional platform subsystem includes a driving-related message related to the first geographic region. At block 1030, a fifth message sent in response to the request is received from the central platform subsystem 210. At block 1040, the information related to the first regional platform subsystem is determined based on the fifth message. At block 1050, a first message is sent to the conveyance 130, the first message includes the information related to the first regional platform subsystem to be used for acquiring a driving-related message associated with the conveyance in the first geographic region, and the driving-related message associated with the conveyance is used for a driving control on the conveyance in the first geographic region.

In some embodiments, the request for the acquiring information related to the first regional platform subsystem related information includes the conveyance-related information, the conveyance-related information is used by the central platform subsystem to determine the information related to the first regional platform subsystem, and the determined information related to the first regional platform subsystem is sent to the device platform subsystem via the fifth message.

In some embodiments, the fifth message includes a table of information related to regional platform subsystems n. Determining the information related to the first regional platform subsystem includes: determining the information related to the first regional platform subsystem from the table of information related to regional platform subsystems based on the conveyance-related information.

In some embodiments, the process 1000 further includes: receiving, at the device platform subsystem, a request for authentication from the conveyance; sending the request for authentication to the first regional platform subsystem, where the request for authentication is used for requesting the first regional platform subsystem to authenticate the conveyance based on the conveyance-related information; receiving a third message from the first regional platform subsystem, the third message including authorization information, and the authorization information is used for a communication between the conveyance and the first regional platform subsystem; and sending the third message to the conveyance.

In some embodiments, the driving-related message is sent to the first regional platform subsystem by a road-side subsystem or a third party information publishing system.

In some embodiments, the driving-related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported.

In some embodiments, the information related to the first regional platform subsystem includes one or more of: a city name, a serial number of a city, a list of geographic regions included in a city, a service address of a geographic region, or location information of the geographic region.

Fig. 1100 is a flowchart of a method 1100 for assisting in driving control according to an embodiment of the present disclosure. The method 1100 may be implemented at a central platform subsystem 210 in Fig. 2. It should be understood that, although the steps in the method 1100 are shown in a specific order, some of the steps may be performed in an order different from the shown order or in parallel. The embodiment of the present disclosure is not limited in this respect.

At block 1110, at the central platform subsystem 210, a request for acquiring information related to the first regional platform subsystem is received from a device platform subsystem 230 associated with a conveyance located in a first geographic region, and a first regional platform subsystem 240-1 includes a driving-related message related to the first geographic region where the conveyance 130 is located. At block 1120, a fifth message is sent to the device platform subsystem 230 in response to the request, to cause the device platform subsystem 230 to determine the information related to the first regional platform subsystem based on the fifth message. The information related to the first regional platform subsystem is used for acquiring a driving-related message associated with the conveyance 130 in the first geographic region, and the driving-related message associated with the conveyance 130 is used for a driving control on the conveyance 130 in the first geographic region.

In some embodiments, the process 1100 further includes: determining, at the central platform subsystem, the information related to the first regional platform subsystem from a table of information related to regional platform subsystems based on conveyance-related information, where the information related to the first regional platform subsystem is sent to the device platform subsystem via the fifth message.

In some embodiments, the fifth message includes a table of information related to regional platform subsystems, and the table of information related to regional platform subsystems is used by the device platform subsystem to determine the information related to the first regional platform subsystem therefrom based on the conveyance-related information.

In some embodiments, the driving-related message is sent to the first regional platform subsystem by a road-side subsystem or a third party information publishing system.

In some embodiments, the driving-related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported.

In some embodiments, the information related to the first regional platform subsystem includes one or more of: a city name, a serial number of a city, a list of geographic regions included in a city, a service address of a geographic region, or location information of the geographic region.

### Example Apparatus and Device

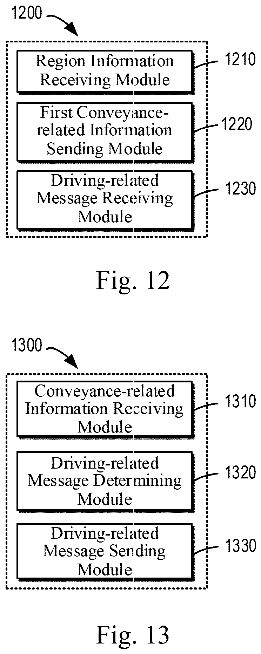

Fig. 12 is a schematic block diagram of an apparatus 1000 for driving control according to an embodiment of the present disclosure. The apparatus 1200 may be included in a conveyance 130 illustrated in Figs. 1 and 2 or implemented as the conveyance 130. As shown in Fig. 12, the apparatus 1200 includes: a region information receiving module, configured to receive, at a conveyance located in a first geographic region, a first message from a device platform subsystem associated with the conveyance, the first message including information related to a first regional platform subsystem, and the first regional platform subsystem including a driving-related message related to the first geographic region. The apparatus 1200 further includes: first conveyance-related information sending module, configured to send a second message to the first regional platform subsystem, the second message including conveyance-related information of the conveyance. The apparatus 1200 further includes: a driving-related message receiving module, configured to receive, from the first regional platform subsystem, a driving-related message associated with the conveyance in the first geographic region, where the driving-related message associated with the conveyance is determined based on the conveyance-related information and is used for a driving control on the conveyance in the first geographic region.

In some embodiments, the apparatus 1200 further includes: an authentication request sending module, configured to send, at the conveyance, an authentication request, the authentication request being used for requesting the first regional platform subsystem to authenticate the conveyance based on the conveyance-related information. In some embodiments, the apparatus 1200 further includes: an authorization information receiving module, configured to receive a third message, the third message including authorization information, and the authorization information being used for a communication between the conveyance and the first regional platform subsystem.

In some embodiments, the authentication request sending module is configured to: send the authentication request to the first regional platform subsystem via the device platform subsystem; or send the authentication request to the first regional platform subsystem directly.

In some embodiments, the authorization information receiving module is configured to: receive the third message from the first regional platform subsystem via the device platform subsystem; or receive the third message from the first regional platform subsystem directly.

In some embodiments, the apparatus 1200 further includes: a second conveyance-related information sending module, configured to send, before receiving the first message, a fourth message to the device platform subsystem, the fourth message including the conveyance-related information, and the conveyance-related information in the fourth message being used for determining the information related to the first regional platform subsystem.

In some embodiments, the conveyance-related information in the fourth message, as a portion of a request for the information related to the first regional platform subsystem, is further sent by the device platform subsystem to a central platform subsystem, for the central platform subsystem to determine the information related to the first regional platform subsystem.

In some embodiments, the information related to the first regional platform subsystem is determined by the device platform subsystem from a table of information related to regional platform subsystems based on the conveyance-related information in the fourth message, where the table of information related to the regional platform subsystems is sent by the central platform subsystem in response to the device platform subsystem requesting for the information related to the first regional platform subsystem.

In some embodiments, the driving-related message is sent to the first regional platform subsystem by a road-side subsystem or a third party information publishing system.

In some embodiments, the driving-related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported. When the conveyance-related information includes the business requirement type, the driving-related message receiving module 1230 is further configured to: receive the driving-related message associated with the conveyance in the first geographic region according to the business requirement type.

In some embodiments, the information related to the first regional platform subsystem includes one or more of: a city name, a serial number of a city, a list of geographic regions included in the city, a service address of a geographic region, or location information of the geographic region.

Fig. 13 is a schematic block diagram of an apparatus 1100 for assisting in driving control according to an embodiment of the present disclosure. The apparatus 1300 may be included in a regional platform subsystem 240 illustrated in Fig. 2 or implemented as the regional platform subsystem 240. As shown in Fig. 13, the apparatus 1300 includes: a conveyance-related information receiving module, configured to receive, at a first regional platform subsystem, a second message from a conveyance located in a first geographic region, the second message including conveyance-related information of the conveyance, and the first regional platform subsystem including a driving-related message related to the first geographic region. The apparatus 1300 further includes: a driving-related message determining module, configured to determine a driving-related message associated with the conveyance in the first geographic region based on the conveyance-related information. The apparatus 1300 further includes: a driving-related message sending module, configured to send the driving-related message associated with the conveyance to the conveyance, where the driving-related message associated with the conveyance is used for a driving control on the conveyance in the first geographic region.

In some embodiments, the apparatus 1300 further includes: an authentication request receiving module, configured to receive, at the first regional platform subsystem, an authentication request; and a registering module, configured to register the conveyance based on the conveyance-related information; an authorization certification module, configured to generate authorization information based on the conveyance-related information, the authorization information being used for a communication between the conveyance and the first regional platform subsystem; and an authorization information sending module, configured to send a third message, the third message including the authorization information.

In some embodiments, the authentication request receiving module is configured to: receive the authentication request from the conveyance via a device platform subsystem associated with the conveyance; or receive the authentication request from the conveyance directly.

In some embodiments, the authorization information sending module is configured to: send the third message to the conveyance via the device platform subsystem associated with the conveyance; or send the third message to the conveyance directly.

In some embodiments, the apparatus 1300 further includes: a driving-related message receiving module, configured to receive, at the first regional platform subsystem, the driving-related message from a road-side subsystem or a third party information publishing system.

In some embodiments, the driving-related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported. When the conveyance-related information includes the business requirement type, the driving-related message determining module 1320 is further configured to: determine, at the first regional platform subsystem, the driving-related message associated with the conveyance in the first geographic region according to the business requirement type and the range to which the reporting of the required data type relates. The driving-related message sending module 1330 is further configured to: send the driving-related message associated with the conveyance to the conveyance according to the frequency at which the required data type is reported.

In some embodiments, the information related to the first regional platform subsystem includes one or more of: a city name, a serial number of a city, a list of geographic regions included in a city, a service address of a geographic region, or location information of the geographic region.

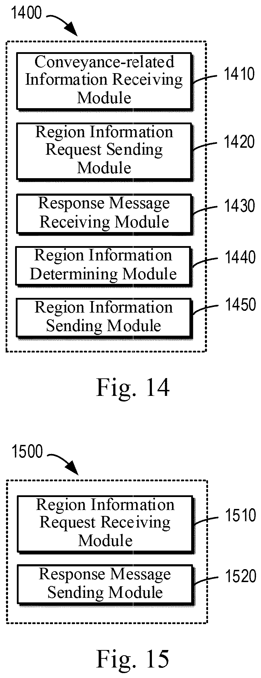

Fig. 14 is a schematic block diagram of an apparatus 1400 for assisting in driving control according to an embodiment of the present disclosure. The apparatus 1400 may be included in a device platform subsystem 230 in Fig. 2 or implemented as the device platform subsystem 230. As shown in Fig. 14, the apparatus 1400 includes: a conveyance-related information receiving module 1410, configured to receive, at a device platform subsystem associated with a conveyance located in a first geographic region, a fourth message from the conveyance, the fourth message including conveyance-related information. The apparatus 1400 further includes: a region information request sending module 1420, configured to send a request for acquiring information related to a first regional platform subsystem to a central platform subsystem, the first regional platform subsystem including a driving-related message related to the first geographic region. The apparatus 1400 further includes: a response message receiving module 1430, configured to receive, from the central platform subsystem, a fifth message sent in response to the request. The apparatus 1400 further includes: a region information determining module 1440, configured to determine the information related to the first regional platform subsystem based on the fifth message. The apparatus 1400 further includes: a region information sending module 1450, configured to send a first message to the conveyance, where the first message includes the information related to the first regional platform subsystem to be used for acquiring a driving-related message associated with the conveyance in the first geographic region, and the driving-related message associated with the conveyance is used for a driving control on the conveyance in the first geographic region.

In some embodiments, the request for acquiring information related to the first regional platform subsystem includes the conveyance-related information, the conveyance-related information is used by the central platform subsystem to determine the information related to the first regional platform subsystem, and the determined information related to the first regional platform subsystem is sent to the device platform subsystem via the fifth message.

In some embodiments, the fifth message includes a table of information related to regional platform subsystems. The region information determining module 1440 is configured to: determine the information related to the first regional platform subsystem from the table of information related to regional platform subsystems based on the conveyance-related information.

In some embodiments, the apparatus 1400 further includes: an authentication request module, configured to receive, at the device platform subsystem, an authentication request from the conveyance; a forwarding module, configured to send the authentication request to the first regional platform subsystem, the authentication request being used for requesting the first regional platform subsystem to authenticate the conveyance based on the conveyance-related information; an authorization information receiving module, configured to receive a third message from the first regional platform subsystem, the third message including authorization information, and the authorization information being used for a communication between the conveyance and the first regional platform subsystem; and an authorization information sending module, configured to send the third message to the conveyance.

In some embodiments, the driving related message is sent to the first regional platform subsystem by a road-side subsystem or a third party information publishing system.

In some embodiments, the driving related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported.

In some embodiments, the information related to the first regional platform subsystem includes one or more of: a city name, a serial number of a city, a list of geographic regions included in the city, a service address of a geographic region, or location information of the geographic region.

Fig. 15 is a schematic block diagram of an apparatus 1500 for assisting in driving control according to an embodiment of the present disclosure. The apparatus 1500 may be included in a central platform subsystem 210 illustrated in Fig. 2 or implemented as the central platform subsystem. As shown in Fig. 15, the apparatus 1500 includes: a region information request receiving module 1510, configured to receive, at a central platform subsystem, a request for acquiring information related to a first regional platform subsystem from a device platform subsystem associated with a conveyance located in a first geographic region, where the first regional platform subsystem includes a driving-related message related to the first geographic region where the conveyance is located. The apparatus 1500 further includes: a response message sending module 1520, configured to send a fifth message to the device platform subsystem in response to the request, where the fifth message is used by the device platform subsystem to determine the information related to the first regional platform subsystem, the information related to the first regional platform subsystem is used for acquiring a driving-related message associated with the conveyance in the first geographic region, and the driving-related message associated with the conveyance is used for a driving control on the conveyance in the first geographic region.

In some embodiments, the request for acquiring the information related to the first regional platform subsystem includes conveyance-related information. The apparatus 1500 further includes: a region information determining module, configured to determine, at the central platform subsystem, the information related to the first regional platform subsystem from a table of information related to regional platform subsystems based on the conveyance-related information, where the information related to the first regional platform subsystem is sent to the device platform subsystem via the fifth message.

In some embodiments, the fifth message includes a table of information related to regional platform subsystems, and the table of the information related to the regional platform subsystems is used by the device platform subsystem to determine the information related to the first regional platform subsystem therefrom based on the conveyance-related information.

In some embodiments, the driving-related message is sent to the first regional platform subsystem by a road-side subsystem or a third party information publishing system.

In some embodiments, the driving-related message includes one or more of: signal light data, a road-side perception event, traffic sign information, or road-side perception information.

In some embodiments, the conveyance-related information includes one or more of: a unique identification code, geographic location information, speed information, a travel direction, or a business requirement type of the conveyance.

In some embodiments, the business requirement type further includes one or more of: a required data type, a range to which reporting of the required data type relates, or a frequency at which the required data type is reported.

In some embodiments, the information related to the first regional platform subsystem includes one or more of: a city name, a serial number of a city, a list of geographic regions included in the city, a service address of a geographic region, or location information of the geographic region.

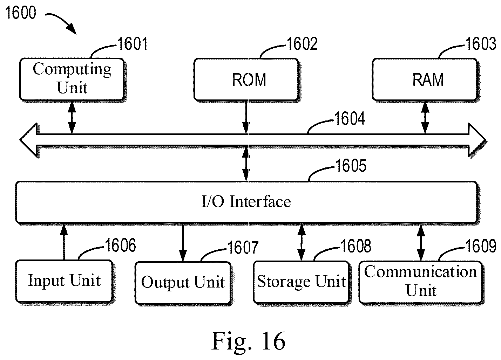

Fig. 16 shows a schematic block diagram of an exemplary device 1600 capable of implementing various embodiments of the present disclosure. The device 1600 may be used for implementing the wireless transceiver modules 132, the central platform subsystem 210, the road-side subsystems 220, the device platform service subsystem 230, and the regional platform subsystem 240. As shown in the figure, the device 1600 includes a computing unit 1601 that may perform various appropriate actions and processing in accordance with computer program instructions stored in a read only memory (ROM) 1602 or computer program instructions loaded into a random access memory (RAM) 1603 from a storage unit 1608. In the RAM 1603, various programs and data required for the operation of the device 1600 may also be stored. The computing unit 1601, the ROM 1602, and the RAM 1603 are connected to each other through a bus 1604. An input/output (I/O) interface 1605 is also coupled to the bus 1604.

A plurality of components in the device 1600 are coupled to the I/O interface 1605, including: an input unit 1606, such as a keyboard or a mouse; an output unit 1607, such as various types of displays, or speakers; the storage unit 1608, such as a disk or an optical disk; and a communication unit 1609 such as a network card, a modem, or a wireless communication transceiver. The communication unit 1609 allows the device 1600 to exchange information/data with other devices over a computer network such as the Internet and/or various telecommunication networks.

The computing unit 1601 can be a variety of generic and/or special-purpose processing components with processing and computing capabilities. Some examples of the computing unit 1601 include but are not limited to the central processing unit (CPU), graphics processing unit (GPU), various kinds of special-purpose artificial intelligence (AI) computing chips, various kinds of computing units running machine learning algorithms, digital signal processor (DSP), and any appropriate processor, controller and micro controller, etc. The computing unit 1601 performs the various methods and processes described above, such as the process 800, process 900, process 1000 and/or the process 1100. For example, in some embodiments, the process 800, process 900, process 1000 and/or the process 1100 may be implemented as a computer software program that is tangibly embodied in a machine readable medium, such as the storage unit 1608. In some embodiments, some or all of the computer programs may be loaded and/or installed onto the device 1600 via the ROM 1602 and/or the communication unit 1609. When a computer program is loaded into the RAM 1603 and executed by the computing unit 1601, one or more of the actions or steps of the process 800, process 900, process 1000 and/or the process 1100 described above may be performed. Alternatively, in other embodiments, the computing unit 1601 may be configured to perform the process the process 800, process 900, process 1000 and/or the process 1100 by any other suitable means (e.g., by means of firmware).

The functions described herein above may be performed, at least in part, by one or more hardware logic components. For example, and without limitation, exemplary types of hardware logic components that may be used include: Field Programmable Gate Array (FPGA), Application Specific Integrated Circuit (ASIC), Application Specific Standard Product (ASSP), System on Chip (SOC), Complex Programmable Logic Device (CPLD), and the like.

Program codes for implementing the method of the present disclosure may be written in any combination of one or more programming languages. These program codes may be provided to a processor or controller of a general purpose computer, special purpose computer or other programmable data processing apparatus such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In addition, although various actions are described in a specific order, this should not be understood that such actions are required to be performed in the specific order shown or in sequential order, or all illustrated actions should be performed to achieve the desired result. Multitasking and parallel processing may be advantageous in certain circumstances. Likewise, although several specific implementation details are included in the above discussion, these should not be construed as limiting the scope of the present invention, whose scope is defined by the appended claims.

Although the embodiments of the present disclosure are described in language specific to structural features and/or method logic actions, it should be understood that the subject matter defined in the appended claims is not limited to the specific features or actions described above. Instead, the specific features and actions described above are merely exemplary forms of implementing the claims.

## Claims

1. A method for assisting in driving control, comprising:
receiving (910), at a first regional platform subsystem, a message from a conveyance located in a first geographic region, the message including conveyance-related information of the conveyance;
determining (920) a driving-related message associated with the conveyance in the first geographic region based on the conveyance-related information; and
sending (930) the driving-related message associated with the conveyance to the conveyance, wherein the driving-related message associated with the conveyance is used for a driving control on the conveyance in the first geographic region,
wherein the first regional platform subsystem receives driving-related messages from road-side subsystems associated therewith and determines the driving-related message associated with the geographic region where the conveyance is located;
wherein the road-side subsystems are deployed in the vicinity of the geographic region where the conveyance travels and/or parks, the road-side subsystem include one or more road-side computing module, one or more perception device, and one or more semaphore,
wherein the road-side computing module is configured to process original perception information from perception devices and generate a driving-related message for a conveyance based on the original perception information,
wherein the conveyance-related information comprises a requirement type for receiving data reporting including at least a required data type and a corresponding range, as distance from the conveyance, for which the reporting of the data type is required,
wherein when the conveyance is about to enter an intersection, a road-side subsystem associated with the intersection is a road-side subsystem that provides a service, and road-side computing modules included in the road-side subsystem constitute a set; and then a distance between the conveyance and each road-side computing module in the set is calculated, and a road-side computing module with a distance within a requirement range is selected, by the first regional platform subsystem, according to different ranges for different data types in the
requirement types sent by the conveyance, so that a corresponding set of road-side computing modules is selected according to the different data types; and the first regional platform subsystem issues a corresponding set of driving-related data to the conveyance according to frequencies at which the different data types are reported.

2. The method according to claim 1, further comprising:
receiving, at the first regional platform subsystem, an authentication request;
registering the conveyance based on the conveyance-related information;
generating authorization information based on the conveyance-related information, the authorization information being used for a communication between the conveyance and the first regional platform subsystem; and
sending a third message, the third message including the authorization information.

3. The method according to claim 2, the receiving the authentication request comprises:
receiving the authentication request from the conveyance via a device platform subsystem associated with the conveyance; or
receiving the authentication request from the conveyance directly.

4. The method according to claim 3, the sending the third message comprises:
sending the third message to the conveyance via the device platform subsystem associated with the conveyance; or
sending the third message to the conveyance directly.

5. The method according to claim 1 or 4, further comprising: the driving-related message includes one or more of:
signal light data, a road-side perception event, traffic sign information, or road-side perception information.

6. The method according to any one of claims 1 4-5, wherein the conveyance-related information includes a requirement type of the conveyance and one or more of: a unique identification code, geographic location information, speed information, a travel direction.

7. An electronic device to perform as a regional platform subsystem, comprising:
one or more processors; and
a storage apparatus, configured to store one or more programs, wherein the one or more programs, when executed by the one or more processors, cause the one or more processors to implement the method according to any one of claims 1-6.

8. A driving control system, comprising:
an electronic device according to claim 7, and
a road-side subsystem configured to perform the corresponding steps as defined in claim 1.

## Patentansprüche

1. Verfahren zur Unterstützung der Fahrkontrolle, das Folgendes umfasst:
Empfangen (910), an einem ersten regionalen Plattformsubsystem, einer Nachricht von einem Fahrzeug, das sich in einer ersten geographischen Region befindet, wobei die Nachricht fahrzeugbezogene Informationen des Fahrzeugs enthält;
Bestimmen (920) einer fahrzeugbezogenen Nachricht, die dem Fahrzeug in der ersten geografischen Region zugeordnet ist, basierend auf den fahrzeugbezogenen Informationen; und
Senden (930) der fahrzeugbezogenen Nachricht, die dem Fahrzeug zugeordnet ist, an das Fahrzeug, wobei die fahrzeugbezogene Nachricht, die dem Fahrzeug zugeordnet ist, für eine Fahrzeugsteuerung in der ersten geographischen Region verwendet wird,
wobei das erste regionale Plattformsubsystem fahrzeugbezogene Nachrichten von damit zugeordneten straßenseitigen Subsystemen empfängt und die fahrzeugbezogene Nachricht bestimmt, die der geographischen Region zugeordnet ist, in der sich das Fahrzeug befindet,
wobei die straßenseitigen Subsysteme in der Nähe der geographischen Region eingesetzt werden, in der das Fahrzeug fährt und/oder parkt, wobei das straßenseitige Subsystem ein oder mehrere straßenseitige Computermodule, eine oder mehrere Wahrnehmungsvorrichtungen und ein oder mehrere Semaphoren enthält,
wobei das straßenseitige Computermodul dafür konfiguriert ist, ursprüngliche Wahrnehmungsinformationen von Wahrnehmungsvorrichtungen zu verarbeiten und basierend auf den ursprünglichen Wahrnehmungsinformationen eine fahrzeugbezogene Nachricht für ein Fahrzeug zu erzeugen,
wobei die fahrzeugbezogenen Informationen einen Anforderungstyp für den Empfang von Datenmeldungen umfassen, der mindestens einen erforderlichen Datentyp und einen entsprechenden Bereich als Entfernung vom Fahrzeug enthält, für den die Meldung des Datentyps erforderlich ist,
wobei, wenn das Fahrzeug im Begriff ist, in eine Kreuzung einzufahren, ein der Kreuzung zugeordnetes straßenseitiges Subsystem ein straßenseitiges Subsystem ist, das einen Dienst bereitstellt, und in dem straßenseitigen Subsystem enthaltene straßenseitige Computermodule einen Satz bilden; und dann wird eine Entfernung zwischen dem Fahrzeug und jedem straßenseitigen Computermodul in dem Satz berechnet, und ein straßenseitiges Computermodul mit einer Entfernung innerhalb eines Anforderungsbereichs wird durch das erste regionale Plattformsubsystem nach verschiedenen Bereichen für verschiedene Datentypen in den von dem Fahrzeug gesendeten Anforderungstypen ausgewählt, so dass ein entsprechender Satz von straßenseitigen Computermodulen nach den verschiedenen Datentypen ausgewählt wird; und das erste regionale Plattformsubsystem gibt einen entsprechenden Satz fahrzeugbezogener Daten an das Fahrzeug aus, entsprechend der Häufigkeit, mit der die verschiedenen Datentypen gemeldet werden.

2. Verfahren nach Anspruch 1, das ferner folgendes umfasst:
Empfangen einer Authentifizierungsanforderung im ersten regionalen Plattformsubsystem,
Registrieren des Fahrzeugs basierend auf den fahrzeugbezogenen Informationen;
Erzeugen von Autorisierungsinformationen basierend auf den fahrzeugbezogenen Informationen, wobei die Autorisierungsinformationen für eine Kommunikation zwischen dem Fahrzeug und dem ersten regionalen Plattformsubsystem verwendet werden; und
Senden einer dritten Nachricht, wobei die dritte Nachricht die Autorisierungsinformationen enthält.

3. Verfahren nach Anspruch 2, wobei das Empfangen der Authentifizierungsanforderung umfasst:
Empfangen der Authentifizierungsanforderung von dem Fahrzeug über ein Vorrichtungsplattform- Subsystem, das dem Fahrzeug zugeordnet ist; oder
direktes Empfangen der Authentifizierungsanforderung von dem Fahrzeug.

4. Verfahren nach Anspruch 3, wobei das Senden der dritten Nachricht umfasst:
Senden der dritten Nachricht an das Fahrzeug über das dem Fahrzeug zugeordnete Vorrichtungsplattform-Subsystem, oder
direktes Senden der dritten Nachricht an das Fahrzeug.

5. Verfahren nach Anspruch 1 oder 4, das ferner umfasst:
die fahrbezogene Nachricht enthält eines oder mehrere der Folgenden:
Signallichtdaten, ein straßenseitiges Wahrnehmungsereignis, Verkehrszeicheninformationen oder straßenseitige Wahrnehmungsinformationen.

6. Verfahren nach einem der Ansprüche 1, 4-5, wobei die fahrzeugbezogenen Informationen einen Anforderungstyp des Fahrzeugs und eines oder mehrere der Folgenden enthalten:
einen eindeutigen Identifikationscode, geographische Standortinformationen, Geschwindigkeitsinformationen, eine Fahrtrichtung.

7. Elektronische Vorrichtung, die als regionales Plattformsubsystem fungiert und Folgendes umfasst:
einen oder mehrere Prozessoren; und
eine Speichervorrichtung, die dafür konfiguriert ist, ein oder mehrere Programme zu speichern, wobei das eine oder die mehreren Programme, wenn sie von dem einen oder den mehreren Prozessoren ausgeführt werden, den einen oder die mehreren Prozessoren veranlassen, das Verfahren nach einem der Ansprüche 1-6 zu implementieren.

8. Fahrsteuerungssystem, das umfasst:
eine elektronische Vorrichtung nach Anspruch 7, und
ein straßenseitiges Subsystem, das dafür konfiguriert ist, die entsprechenden Schritte gemäß Anspruch 1 auszuführen.

## Revendications

1. Procédé d'assistance à la commande de conduite, comportant les étapes consistant à :
recevoir (910), au niveau d'un premier sous-système de plate-forme régionale, un message en provenance d'un moyen de transport situé dans une première région géographique, le message comprenant des informations se rapportant au moyen de transport du moyen de transport ;
déterminer (920) un message se rapportant à la conduite qui est associé au moyen de transport dans la première région géographique sur la base des informations se rapportant au moyen de transport ; et
envoyer (930) à destination du moyen de transport le message se rapportant à la conduite associé au moyen de transport, dans lequel le message se rapportant à la conduite associé au moyen de transport est utilisé pour une commande de conduite sur le moyen de transport dans la première région géographique,
dans lequel le premier sous-système de plate-forme régionale reçoit des messages se rapportant à la conduite en provenance de sous-systèmes en bord de route qui sont associés à celui-ci et détermine le message se rapportant à la conduite associé à la région géographique où se trouve le moyen de transport ;
dans lequel les sous-systèmes en bord de route sont déployés à proximité de la région géographique où le moyen de transport circule et/ou est stationné, le sous-système en bord de route comprend un ou plusieurs modules de calcul en bord de route, un ou plusieurs dispositifs de perception et un ou plusieurs sémaphores,
dans lequel le module de calcul en bord de route est configuré pour traiter des informations de perception d'origine en provenance de dispositifs de perception et pour générer un message se rapportant à la conduite pour un moyen de transport sur la base des informations de perception d'origine,
dans lequel les informations se rapportant au moyen de transport comportent un type d'exigence pour la réception de rapports de données comprenant au moins un type de données requis et une plage correspondante, comme la distance par rapport au moyen de transport, pour laquelle le rapport du type de données est requis,
dans lequel, quand le moyen de transport est sur le point d'entrer dans un carrefour, un sous-système en bord de route associé au carrefour est un sous-système en bord de route qui fournit un service, et des modules de calcul en bord de route inclus dans le sous-système en bord de route constituent un ensemble ; et ensuite, une distance entre le moyen de transport et chaque module de calcul en bord de route dans l'ensemble est calculée, et un module de calcul en bord de route avec une distance dans une plage d'exigences est sélectionné par le premier sous-système de plate-forme régionale, en fonction de différentes plages pour différents types de données dans les types d'exigences envoyés par le moyen de transport, de telle sorte qu'un ensemble correspondant de modules de calcul en bord de route est sélectionné en fonction des différents types de données ; et le premier sous-système de plate-forme régionale émet un ensemble correspondant de données se rapportant à la conduite au moyen de transport en fonction des fréquences auxquelles les différents types de données sont rapportés.

2. Procédé selon la revendication 1, comportant par ailleurs les étapes consistant à :
recevoir, au niveau du premier sous-système de plate-forme régionale, une demande d'authentification ;
enregistrer le moyen de transport sur la base des informations se rapportant au moyen de transport ;
générer des informations d'autorisation sur la base des informations se rapportant au moyen de transport, les informations d'autorisation étant utilisées à des fins de communication entre le moyen de transport et le premier sous-système de plate-forme régionale ; et
envoyer un troisième message, le troisième message comprenant les informations d'autorisation.

3. Procédé selon la revendication 2, dans lequel l'étape consistant à recevoir la demande d'authentification comporte les étapes consistant à :
recevoir la demande d'authentification en provenance du moyen de transport par le biais d'un sous-système de plate-forme de dispositif associé au moyen de transport ; ou
recevoir la demande d'authentification directement en provenance du moyen de transport.

4. Procédé selon la revendication 3, dans lequel l'étape consistant à envoyer le troisième message comporte les étapes consistant à :
envoyer le troisième message au moyen de transport par le biais du sous-système de plate-forme de dispositif associé au moyen de transport ; ou
envoyer le troisième message directement au moyen de transport.

5. Procédé selon la revendication 1 ou la revendication 4, comportant par ailleurs :
le message se rapportant à la conduite qui comprend un ou plusieurs parmi les éléments suivants :
des données de feux de signalisation, un événement de perception en bord de route, des informations de panneaux de signalisation routière ou des informations de perception en bord de route.

6. Procédé selon l'une quelconque des revendications 1, 4 et 5, dans lequel les informations se rapportant au moyen de transport comprennent un type d'exigence du moyen de transport et un ou plusieurs parmi les éléments suivants :
un code d'identification unique, des informations de localisation géographique, des informations de vitesse, une direction de déplacement.

7. Dispositif électronique destiné à fonctionner comme un sous-système de plate-forme régionale, comportant :
un ou plusieurs processeurs ; et
un appareil de stockage, configuré pour stocker un ou plusieurs programmes, dans lequel lesdits un ou plusieurs programmes, quand ils sont exécutés par lesdits un ou plusieurs processeurs, amènent lesdits un ou plusieurs processeurs à mettre en œuvre le procédé selon l'une quelconque des revendications 1 à 6.

8. Système de commande de conduite, comportant :
un dispositif électronique selon la revendication 7,
un sous-système en bord de route configuré pour exécuter les étapes correspondantes telles qu'elles sont définies selon la revendication 1.
